# EUROPÄISCHE PATENTANMELDUNG

(11) **EP 4 641 062 A1**
(43) Veröffentlichungstag der Anmeldung: **29.10.2025**
(21) Anmeldenummer: 25158098.1
(22) Anmeldetag: 14.02.2025
(51) Int. Cl.: F16L 37/084, F16L 37/088

(54) **KUPPLUNGSBUCHSE MIT FLEXIBLER WINKELSTELLUNG UND DEREN HERSTELLUNG**

(30) Priorität: 23.04.2024 DE 102024111390
(71) Anmelder: TI Automotive (Fuldabrück) GmbH, 34277 Fuldabrück (DE)
(72) Erfinder: Barthel, Iris, 34270 Schauenburg (DE); Bube, Kay, 36277 Schenklengsfeld (DE); Rohde, Reiner, 34323 Malsfeld (DE); Häckel, Andre, 34513 Waldeck (DE)
(74) Vertreter: Andrejewski - Honke Patent- und Rechtsanwälte Partnerschaft mbB

(57) **Zusammenfassung**

Eine Kupplungsbuchse umfasst einen Buchsenkörper und einen Rückhalter. Der Buchsenkörper (2) weist ein Kopfteil (8) und ein Dichtungsteil (9) auf. Das Kopfteil (8) und das Dichtungsteil (9) sind separat voneinander hergestellt und miteinander über eine Verbindung in einer Winkelstellung in Umfangsrichtung verbunden. Die Kupplungsbuchse (1) umfasst ein Sicherungsteil (7) zur Verbindung von dem Kopfteil (8) und dem Dichtungsteil (9). Das Sicherungsteil (7) definiert einen axialgesicherten Zustand, in dem das Kopfteil (8) und das Dichtungsteil (9) durch das Sicherungsteil (7) axial aneinander gesichert sind. Die Kupplungsbuchse (1) ist so ausgebildet, dass die Herstellung des axial gesicherten Zustands von einer tangentialen Sicherung der Verbindung zwischen dem Kopfteil (8) und dem Dichtungsteil (9) räumlich und/oder zeitlich entkoppelt ist.

## Beschreibung

Die Erfindung betrifft eine Kupplungsbuchse, umfassend einen Buchsenkörper und einen Rückhalter, wobei der Buchsenkörper einen Verbindungsabschnitt und einen Kupplungsabschnitt umfasst, wobei der Rückhalter in dem Kupplungsabschnitt angeordnet ist, wobei der Kupplungsabschnitt ausgebildet ist, einen komplementären Kupplungsstecker in sich aufzunehmen, wobei der Buchsenkörper ein Kopfteil und ein Dichtungsteil aufweist, wobei das Kopfteil und das Dichtungsteil separat voneinander hergestellt und miteinander über eine Verbindung in einer Winkelstellung in Umfangsrichtung verbunden bzw. verbindbar sind, wobei die Kupplungsbuchse ein Sicherungsteil zur Verbindung von Kopfteil und Dichtungsteil umfasst, wobei das Sicherungsteil einen axial gesicherten Zustand definiert, in dem das Kopfteil und das Dichtungsteil durch das Sicherungsteil axial aneinander gesichert sind. Die Erfindung betrifft ferner ein Herstellungsverfahren einer solchen Kupplungsbuchse.

Buchsenkörper mit einem Kopf- und einem Dichtungsteil sind aus der Praxis bekannt. Ein wesentlicher Grund für das Vorsehen eines Kopf- und eines Dichtungsteils ist, dass diese per Baukastenprinzip miteinander kombiniert werden können. Unterschiedlich geformte Kopfteile können dadurch mit unterschiedlichen Dichtungsteilen kombiniert werden, ohne dass für jede Kombination ein eigenes Spritzgusswerkzeug erforderlich ist. Die Dichtungsteiltypen unterscheiden sich untereinander zum Beispiel hinsichtlich unterschiedlichen Winkelungen in einem Längsschnitt. Andere Unterschiede finden sich in der Ausgestaltung des Verbindungsabschnitts. Beispielsweise erfordern damit drei Kopfteiltypen und sieben Dichtungsteiltypen insgesamt nur zehn Spritzgusswerkzeuge und nicht etwa 21. Das Baukastenprinzip verringert folglich die Zahl der kostenintensiven Spritzgusswerkzeuge, so dass die Kupplungsbuchsen günstiger hergestellt werden können.

Ein derartiger zweiteiliger Buchsenkörper ist in DE 10 2016 111 194 A1 offenbart. Das Kopfteil weist vier Sicherungsteile in Form von Rastarmen auf, welche sich in axialer Richtung erstrecken und auf ihren radialen Außenseiten nach radial außen vorspringende Rastnasen umfassen. Die Rastnasen greifen von radial innen nach radial außen in das Dichtungsteil ein und verrasten jeweils in einer zugehörigen, komplementären Ausnehmung im Dichtungsteil. Die Rastarme erzeugen dabei einen Formschluss in radialer Richtung mit einer Innenseite des Dichtungsteils. Darüber hinaus entsteht durch das Einrasten jeweils einer Rastnase in einer zugehörigen Ausnehmung jeweils ein tangentialer und gleichzeitig auch ein axialer Formschluss, so dass Kopfteil praktisch spielfrei in radialer, tangentialer und axialer Richtung mit dem Dichtungsteil verbunden ist.

Die vier Rastnasen sind äquidistant jeweils um 90° in Umfangsrichtung bzw. tangentialer Richtung zueinander versetzt. Gleiches gilt auch für die Ausnehmungen. Dies erlaubt insgesamt vier Winkelstellungen in Umfangsrichtung zwischen dem Kopfteil und dem Dichtungsteil. Damit wirken die Sicherungsteile zugleich als Winkelstellelemente für die Definition von tangentialen Winkelstellungen. Diese vier Winkelstellungen sind allerdings oft nicht ausreichend. Es wurde gefunden, dass auch hinsichtlich der Anzahl der Winkelstellungen in Umfangsrichtung bzw. tangentialer Richtung eine noch größere Flexibilität wünschenswert ist. Aufgabe der Erfindung ist es daher, eine Kupplungsbuchse zu schaffen, mit welcher eine größere Anzahl an tangentialen Winkelstellungen bereitgestellt werden kann.

Diese Aufgabe wird gelöst durch eine Kupplungsbuchse gemäß dem Oberbegriff des Anspruchs 1, dadurch gekennzeichnet, dass die Kupplungsbuchse bzw. der Buchsenkörper bzw. das Sicherungsteil so ausgebildet ist/sind, dass die Herstellung des axial gesicherten Zustands von einer tangentialen Sicherung der Verbindung zwischen dem Kopfteil und dem Dichtungsteil räumlich und/oder zeitlich entkoppelt ist.

Der Erfindung liegt die Erkenntnis zugrunde, dass die Zahl der tangentialen Winkelstellungen zwischen Kopf- und Dichtungsteil von der Ausprägung der Sicherungsteile bzw. Rastnasen/Rastarme am Kopfteil aus DE 10 2016 111 194 A1 und den zugehörigen Ausnahmen am Dichtungsteil festgelegt wird. Es wurde gefunden, dass die Rastnasen und die Rastarme in tangentialer Richtung nicht beliebig verkleinert werden können. Die Fragilität der Sicherungsteile bzw. Rastelemente des Kopfteils begrenzt somit die Zahl der tangentialen Winkelstellungen zwischen Kopf- und Dichtungsteil.

Die Erfindung verschafft hier besonders vorteilhaft Abhilfe, da die Entkopplung des axial gesicherten Zustands von der tangentialen Sicherung bzw. Drehsicherung deutlich kleinere Winkelstellelemente erlaubt. Es wurde gefunden, dass bei einer solchen Entkopplung die tangentialen Winkelstellelemente ohne Rastelemente zur axialen Sicherung ausgestaltet werden können. Der Erfindung liegt die Erkenntnis zugrunde, dass es dann relativ langer und problematisch dünner Rastarme nicht bedarf.

Der Erfindung liegt insbesondere die Erkenntnis zugrunde, dass die Rastelemente zur axialen Sicherung durch ein eigenes Sicherungsteil ersetzt werden, um hierdurch die axiale Sicherung von der tangentialen Sicherung zwischen dem Kopf- und dem Dichtungsteil von einander zu entkoppeln. Hierdurch können relativ viele, relativ kleine Winkelstellelemente vorgesehen werden, die entsprechend viele Winkelstellungen - beispielsweise acht, zehn, zwölf oder noch mehr Winkelstellungen - erlauben. Hierdurch werden tangentiale Winkelstellungen in Schritten von zum Beispiel 45°, 36° oder 30° ermöglicht. Eine kleinstufigere Winkeleinstellung und somit höhere Produktvariabilität ist die Folge. Im Ergebnis wird hierdurch die eingangs genannte Aufgabe gelöst.

Die Mittelachse des Kupplungsabschnitts definiert eine axiale, eine radiale und eine Umfangsrichtung bzw. tangentiale Richtung des Kupplungsabschnitts. Der Ausdruck "Umfangsrichtung" wird nachfolgend als synonym zu "tangentiale Richtung" verwendet. Die verschiedenen Richtungen sind bevorzugt auf den Kupplungsabschnitt des Buchsenkörpers bezogen, können sich aber im Falle eines nicht vom Kupplungsabschnitt abgewinkelten, sondern gerade bzw. koaxial erstreckenden Verbindungsabschnitts auch auf den Verbindungsabschnitt beziehen. Vorzugsweise beziehen sich die Richtungen zusätzlich zum Kupplungsabschnitt auch auf das Sicherungsteil, den Rückhalter und/oder auf einen/den Kupplungsstecker bzw. auf einen Abschnitt des Kupplungssteckers, weil diese Elemente zweckmäßigerweise im Bereich des Kupplungsabschnitts angeordnet sind.

Der Ausdruck "axial einwärts" meint bevorzugt die axiale Richtung von dem Kupplungsabschnitt in Richtung des Verbindungsabschnitts. Mit "radial einwärts" ist mit Vorteil die radiale Richtung zur Mittelachse hin gemeint.

Die axiale Sicherung bzw. der axial gesicherte Zustand durch das Sicherungsteil ist bevorzugt so zu verstehen, dass eine axiale Bewegung zwischen Kopfteil und Dichtungsteil relativ zueinander verhindert wird, sodass das Lösen der Verbindung zwischen Kopf- und Dichtungsteil verhindert wird.

Der Verbindungsabschnitt kann mit einem Rohr stoff-, kraft- und/oder formschlüssig verbunden bzw. verbindbar sein. Der Stoffschluss kann beispielsweise mittels Schweißung oder Klebung hergestellt sein. Der Verbindungsabschnitt kann mit einem Aggregat (z.B. eine Pumpe, ein Tank, ein Ventil oder dergleichen) stoff-, kraft- und/oder formschlüssig verbunden sein.

Insbesondere kann der Stoffschluss mit dem Aggregat integral ausgebildet sein. Der Begriff "integral" meint vorzugsweise, dass der Stoffschluss mittels eines Spritzgusses hergestellt ist, so dass der Verbindungsabschnitt ein Bestandteil wenigstens eines spritzgegossenen Teils des Aggregats ist.

Gemäß einer sehr bevorzugten Ausführungsform ist die Kupplungsbuchse bzw. der Buchsenkörper und/oder das Sicherungsteil so ausgebildet ist/sind, dass der axial gesicherte Zustand - zumindest abschnittsweise in Umfangsrichtung und vorzugsweise über einen vollständigen Umfang des Dichtungsteils hinweg - unabhängig herstellbar von der Winkelstellung zwischen dem Kopfteil und dem Dichtungsteil ist. Dies bedeutet vorzugsweise, dass die Herstellung des axial gesicherten Zustands - bevorzugt mittels einer radialen Einführbewegung des Sicherungsteils - zumindest abschnittsweise in Umfangsrichtung stufenlos bzw. kontinuierlich am Dichtungsteil erfolgen kann. Das Dichtungsteil kann beispielsweise eine Nut oder eine Schulter zum Eingriff mit dem Sicherungsteil aufweisen, wobei die Nut oder Schulter sich wenigstens abschnittsweise entlang eines Umfangs und bevorzugt sich entlang eines vollständigen Umfangs des Dichtungsteils erstreckt. Die Erstreckung der Nut oder Schulter entlang eines vollständigen Umfangs ermöglicht eine beliebige Drehung des Dichtungsteils relativ zum Kopfteil, so dass die Zahl der Winkelstellungen lediglich von der Zahl der Winkelstellelemente bzw. komplementären Winkelstellelemente abhängt und nicht etwa vom Sicherungsteil.

Das Dichtungsteil umfasst vorzugsweise wenigstens ein Winkelstellelement und bevorzugt mehrere Winkelstellelemente zur Einstellung der Winkelstellung zwischen dem Dichtungsteil und dem Kopfteil. Hierdurch kann eine bestimmte, vorgegebene Winkelstellung sehr einfach und zugleich präzise eingestellt werden. Mit Vorteil weist das Kopfteil bevorzugt wenigstens ein zum Winkelstellelement komplementäres Winkelstellelement auf. Die Anzahl der Winkelstellelemente bzw. der komplementären Winkelstellelemente definiert zweckmäßigerweise die Zahl der Winkelstellungen. Die Winkelstellelemente bzw. die komplementären Winkelstellelemente sind vorzugsweise als Vorsprünge bzw. als zu den Vorsprüngen komplementäre Ausnehmungen ausgebildet. Gemäß einer Ausführungsform ist das wenigstens eine Winkelstellelement ein nach radial außen ragender Vorsprung und das komplementäre Winkelstellelement eine zu dem Vorsprung komplementäre Ausnehmung. Das wenigstens eine Winkelstellelement ist zweckmäßigerweise auf einer Außenseite des Dichtungsteils angeordnet. Das wenigstens eine komplementäre Winkelstellelement ist bevorzugt auf einer Innenseite des Kopfteils angeordnet.

Es ist sehr von Vorteil, wenn die Winkelstellelemente zueinander identisch ausgebildet sind. Es ist sehr vorteilhaft, wenn die komplementären Winkelstellelemente zueinander identisch ausgebildet sind. Dies ermöglicht die freie Wahl von definierten Winkelstellungen über die Winkelstellelemente bzw. komplementären Winkelstellelemente. Es ist bevorzugt, dass die Winkelstellelemente bzw. die komplementären Winkelstellelemente äquidistant um einen Umfang des Dichtungsteils bzw. des Kopfteils verteilt angeordnet sind. Mit Vorteil entspricht die Zahl der Winkelstellelemente der Zahl der komplementären Winkelstellelemente bzw. der Zahl der Winkelstellungen.

Vorzugsweise umfasst das Dichtungsteil wenigstens 5 bzw. 6 bzw. 7 bzw. 8 Winkelstellelemente. Vorzugsweise umfasst das Kopfteil wenigstens 5 bzw. 6 bzw. 7 bzw. 8 komplementäre Winkelstellelemente. Die ermöglicht eine relativ große Zahl an Winkelstellungen und damit eine große Flexibilität bzw. Auswahl an zur Verfügung stehenden Winkelstellungen. Es ist möglich, dass lediglich eine kleinere Zahl an Winkelstellelementen einer größeren Zahl an komplementären Winkelstellelementen gegenübersteht und umgekehrt. Mit Vorteil ist der Buchsenkörper so ausgebildet, dass das wenigstens eine Winkelstellelement bzw. die Winkelstellelemente und das wenigstens eine komplementäre Winkelstellelement bzw. die komplementären Winkelstellelemente wenigstens 5 bzw. 6 bzw. 7 bzw. 8 definierte Winkelstellungen ermöglichen. Die Anzahl der Winkelstellungen ist bevorzugt endlich. Die Einstellung der Winkelstellung ist bevorzugt gestuft.

Die Verbindung zwischen dem Kopfteil und dem Dichtungsteil wird vorzugsweise durch eine reversible Verbindung zwischen dem Buchsenkörper und dem Sicherungsteil bereitgestellt. Das ermöglicht es, den Buchsenkörper nachträglich zu öffnen, wodurch beispielsweise ein Dichtungsring zum Zwecke der Wartung oder Reparatur ersetzt werden kann.

Die Kupplungsbuchse ist bevorzugt so ausgebildet, dass das Sicherungsteil zur Herstellung des axial gesicherten Zustands in radialer Richtung in den Buchsenkörper bzw. in eine/die Sicherungsnut einführbar bzw. eingeführt ist. Dies ermöglicht aufgrund der rein translatorischen, geradlinigen Bewegung die Verwendung einer relativ einfachen Montagevorrichtung, die das Sicherungsteil in den Buchsenkörper einführt.

Gemäß einer bevorzugten Ausführungsform weist der Buchsenkörper eine Sicherungsnut auf, wobei das Sicherungsteil und/oder der Buchsenkörper bevorzugt so ausgebildet ist/sind, dass das Sicherungsteil bei einem Einführen in den Buchsenkörper und/oder während des axial gesicherten Zustands zumindest teilweise in die Sicherungsnut eingreift. Das Vorsehen einer Sicherungsnut erlaubt eine axial sehr kompakte Sicherungsvorrichtung, so dass die Kupplungsbuchse durch das Vorsehen eines von den Winkelstellelementen entkoppelten Sicherungsteils kaum zusätzlichen Bauraum im Fahrzeug erfordert.

Mit Vorteil weist das Kopfteil einen ersten Abschnitt der Sicherungsnut auf. Vorzugsweise umfasst das Dichtungsteil einen zweiten Abschnitt der Sicherungsnut. Es ist bevorzugt, dass der erste Abschnitt der Sicherungsnut nur einen Teil eines Umfangs des Kopfteils einnimmt. Es ist vorteilhaft, dass der zweite Abschnitt der Sicherungsnut das Dichtungsteil wenigstens teilweise und bevorzugt vollständig umläuft. Das Sicherungsteil kann wenigstens abschnittsweise in Umfangsrichtung einen Formschluss in wenigstens einer axialen Richtung, vorzugsweise in axial einwärtiger und in axial auswärtiger Richtung, mit der Sicherungsnut bzw. mit dem ersten Abschnitt und/oder dem zweiten Abschnitt der Sicherungsnut eingehen. Es ist sehr bevorzugt, dass eine/die U-Basis des Sicherungsteils und/oder freie Enden von U-Schenkeln des Sicherungsteils in dem ersten Abschnitt befindlich ist/sind, wenn der Buchsenkörper bzw. die Kupplungsbuchse sich im axial gesicherten Zustand befindet. Besonders vorzugsweise ist ein/der Hauptabschnitt eines oder beider der U-Schenkel des Sicherungsteils in dem zweiten Abschnitt der Sicherungsnut angeordnet, wenn sich der Buchsenkörper bzw. die Kupplungsbuchse im axial gesicherten Zustand befindet.

In bevorzugter Weise wird/ist das Sicherungsteil in der Sicherungsnut eingerastet. Gemäß einer bevorzugten Ausführungsform umfasst der Buchsenkörper bzw. das Kopfteil und/oder das Sicherungsteil ein Fixierelement - insbesondere ein Rastelement oder Klemmelement - zum Fixieren des Sicherungsteils in der Sicherungsnut. Dies ermöglicht eine dauerhafte Befestigung des Sicherungsteils am Buchsenkörper bzw. in der Sicherungsnut, wobei dies durch lediglich eine translatorische Bewegung einer/der Montagevorrichtung und insbesondere während der Einführbewegung des Sicherungsteils erzielt werden kann. Das Fixierelement kann ein Rastvorsprung oder eine Klemmstelle sein. Das Fixierelement kann an der Sicherungsnut, insbesondere am ersten Abschnitt der Sicherungsnut, angeordnet sein. Es ist bevorzugt, dass das Fixierelement an einer/der U-Basis des Sicherungsteils angreift.

Gemäß einer bevorzugten Ausführungsform ist das Sicherungsteil separat von dem Dichtungsteil und/oder separat von dem Kopfteil hergestellt. Vorzugsweise ist wenigstens ein Teil des Sicherungsteils und weiter vorzugsweise das ganze Sicherungsteil im axial gesicherten Zustand relativ zum Buchsenkörper bzw. zum Dichtungsteil und/oder zum Kopfteil beweglich. Das ganze Sicherungsteil kann beweglich gegenüber dem Buchsenkörper bzw. dem Dichtungsteil bzw. dem Kopfteil sein, indem es beispielsweise aus einem eingerasteten Zustand im Buchsenkörper reversibel lösbar ist. Ein Teil des Sicherungsteils kann beweglich gegenüber dem Buchsenkörper bzw. dem Dichtungsteil bzw. dem Kopfteil sein, indem trotz irreversibler Einrastung im Buchsenkörper einen beispielsweise per Hand oder Werkzeug beweglichen oder leicht spreizbaren Schenkel aufweist.

Besonders vorteilhaft ist/sind das Sicherungsteil und/oder der Buchsenkörper so ausgebildet, dass das Sicherungsteil im gesicherten Zustand zumindest teilweise und bevorzugt vollständig in dem Buchsenkörper versenkt ist. Das bevorzugte vollständige Versenken des Sicherungsteils in dem Buchsenkörper dient dazu, die Montage zu erleichtern und ein ungewolltes Lösen des Sicherungsmittels nach erfolgter Montage zu verhindern. Das Sicherungsteil sorgt durch das Versenken für eine gesteigerte Sicherheit der Verbindung zwischen Kopf- und Dichtungsteil.

Mit Vorteil ist das Sicherungsteil U-förmig ausgebildet. Dies erlaubt eine besonders kompakte Gestaltung des Sicherungsteils mit einer nur geringen axialen Ausdehnung bei einer gleichzeitig zuverlässigen Sicherungsfunktion. Es ist bevorzugt, dass das Sicherungsteil zwei U-Schenkel sowie eine U-Basis aufweist. Die U-Schenkel umfassen zweckmäßigerweise jeweils ein freies Ende. Mit Vorteil umfasst jeder der beiden U-Schenkel des Sicherungsteils einen Hauptabschnitt zwischen dem jeweiligen freien Ende und der U-Basis. Das Sicherungsteil kann Spreizungen an den freien Enden der U-Schenkel aufweisen, um so eine bessere Einführmontage des Sicherungsteils zu gewährleisten. Die Spreizungen an den offenen Enden der Haltklammer sind bevorzugt als nach außen verlaufende Biegungen oder Knicke zu verstehen. Das Sicherungsteil kann eine Ausbuchtung zum vereinfachten Lösen des Sicherungsteils umfassen.

Es ist sehr bevorzugt, dass das Sicherungsteil Metall, insbesondere einen Stahl, aufweist. Besonders bevorzugt umfasst das Sicherungsteil einen Draht. Es ist sehr von Vorteil, dass das Sicherungsteil als Drahtbügel ausgebildet ist. So lässt sich durch die Festigkeit und Robustheit von Metallen ein kompaktes und widerstandsfähiges Sicherungsteil bereitstellen.

Es ist von besonderem Vorteil, dass der Rückhalter als Drahtbügel ausgebildet ist. Es ist möglich, dass der Rückhalter im Wesentlichen U-förmig oder vollständig umlaufend ausgebildet ist. Vorzugsweise ist der Rückhalter U-förmig gestaltet und weist zwei U-Schenkel sowie eine U-Basis auf. Es ist von Vorteil, dass der Rückhalter separat zum Buchsenkörper bzw. Kopfteil bzw. Dichtungsteil ausgebildet ist. Vorzugsweise ist der ganze Rückhalter bzw. wenigstens ein Teil des Rückhalters in dem Buchsenkörper bzw. Kopfteil beweglich gelagert. Zweckmäßigerweise definiert der Rückhalter eine Einschubrichtung, entlang welcher der Rückhalter in Buchsenkörper bzw. das Kopfteil eingeschoben wird. Vorteilhafterweise ist der Rückhalter VDA-konform ausgebildet.

Das Kopfteil und/oder das Dichtungsteil weist/weisen bevorzugt einen Kunststoff auf. Besonders bevorzugt ist/sind das Kopfteil und/oder das Dichtungsteil mittels Spritzgruß hergestellt. Dies erlaubt eine kostengünstige Herstellung des Buchsenkörpers.

Die Kupplungsbuchse umfasst bevorzugt einen Dichtungsring zur fluidischen Abdichtung zwischen der Kupplungsbuchse und dem Kupplungsstecker. Zweckmäßigerweise umfasst der Buchsenkörper eine Dichtungsnut, in welcher vorzugsweise der Dichtungsring angeordnet ist. Die Dichtungsnut mag eine axial innere Nutwand und/oder eine axial äußere Nutwand und/oder einen Nutgrund umfassen. Der Dichtungsring kann ein Elastomer aufweisen.

Vorzugsweise umfasst die Kupplungsbuchse bzw. der Buchsenkörper einen Entkopplungsring zum Entkoppeln des Kopfteils von dem Dichtungsteil. Dadurch soll eine Kupplungsbuchse geschaffen werden, die einerseits eine große Flexibilität hinsichtlich der Drehung des Kopfteils relativ zum Dichtungsteil bietet und andererseits beim Einführen des Kupplungssteckers relativ leichtgängig ist. Die leichtgängige Einführung des Kupplungssteckers wird durch einen Dichtungsring erreicht, der nicht rein rotationssymmetrisch angeordnet bzw. geformt ist, sondern sich über seine axiale Dicke hinaus in axialer Richtung aufgrund der nicht-rotationssymmetrischen Anordnung erstreckt. Hierdurch wird die benötigte Einführkraft über den Einführweg etwas gestreckt und gleichzeitig etwas verringert.

Der Entkopplungsring ist bevorzugt separat von dem Kopfteil hergestellt, so dass der Entkopplungsring mit dem Kopfteil zweckmäßigerweise nicht integral verbunden ist. Mit Vorteil bildet der Entkopplungsring mit einer axial einwärts gewandten Rückseite wenigstens einen Abschnitt der axial äußeren Nutwand der Dichtungsnut. Vorzugsweise steht der Entkopplungsring in Umfangsrichtung in einem Formschluss - insbesondere über eine Nut-Feder-Verbindung - mit dem Dichtungsteil. Dies ermöglicht eine definierte Ausrichtung des Entkopplungsrings in Umfangsrichtung relativ zu einer inneren Nutwand bzw. zum Dichtungsteil. Es ist bevorzugt, dass der Entkopplungsring ein Winkelfestlegungselement umfasst. Es ist vorteilhaft, dass das Dichtungsteil ein komplementäres Winkelfestlegungselement aufweist.

Es ist von Vorteil, dass der Nutgrund und/oder die innere Nutwand und/oder die äußere Nutwand der Dichtungsnut in einem Längsschnitt der Kupplungsbuchse gesehen wenigstens abschnittsweise eine gebogene Kontur aufweist/aufweisen. Dies ermöglicht eine sicherere Aufnahme des Dichtungsrings. Es ist bevorzugt, dass die gebogene Kontur der inneren Nutwand im Längsschnitt gesehen eine nach axial einwärts gerichtete Ausbuchtung umfasst. Es ist möglich, dass die äußere Nutwand eine gerade Kontur bzw. eine sich lediglich in radialer Richtung erschreckende Kontur umfasst. Es ist möglich, dass der Nutgrund im Längsschnitt der Kupplungsbuchse gesehen eine sich lediglich in axialer Richtung erstreckende Kontur aufweist.

Mit Vorteil umfasst die Kupplungsbuchse ein Anzeigeelement zur Anzeige einer Position des Kupplungssteckers innerhalb der Kupplungsbuchse. Dies bietet eine größere Montagesicherheit. Es ist möglich, dass die Kupplungsbuchse so ausgebildet ist, dass das Anzeigeelement anzeigt, dass der Kupplungsstecker vollständig in die Kupplungsbuchse eingeführt wurde. Gemäß einer Ausführungsform ist die Kupplungsbuchse so ausgebildet ist, dass das Anzeigeelement anzeigt, dass der Kupplungsstecker nicht vollständig in die Kupplungsbuchse eingeführt wurde.

Das Anzeigeelement kann ein optisches und/oder haptisches und/oder elektrisches bzw. elektronisches Anzeigesignal darstellen. Das Anzeigeelement kann beispielsweise als QR-Code und/oder als ein aus dem Kupplungskörper hervorstehendes Element und/oder als ein Funksignal gestaltet sein. Es ist bevorzugt, dass das Anzeigeelement unmittelbar oder mittelbar mit dem Kupplungsstecker in Kontakt kommt. Es ist möglich, dass ein Schiebeelement auf einer Außenseite des Kupplungskörpers nur in einem vollständig eingeführten Zustand des Kupplungssteckers in axialer Richtung verschoben werden kann, so dass ein Anzeigeelement in Form eines optischen Codes, beispielsweise ein QR-Code oder ein Strichcode, für den Nutzer sichtbar wird.

Es ist möglich, dass der Rückhalter das Anzeigeelement aufweist, wobei der Rückhalter bzw. das Anzeigeelement nur bei einem vollständig eingeführten Kupplungsstecker in den Kupplungskörper einführbar ist. Es ist möglich, dass im Falle eines nicht eingeführten Kupplungssteckers ein Stromkreis offen bleibt oder geschlossen wird, so dass ein Chip ein entsprechendes Funksignal abgibt und als Anzeigeelement fungiert.

Die eingangs genannte Aufgabe wird durch eine Fluidleitung gelöst, wobei die Fluidleitung eine erfindungsgemäße Kupplungsbuchse und ein Rohr umfasst. Hierdurch wird die fluidtechnische Komplexität auf die Fluidleitung verlagert, so dass der Kupplungsstecker deutlich einfacher gestaltet werden kann. In der Folge können die Aggregate mit einfachen Kupplungssteckern ausgestattet werden, wodurch eine klare Aufgabentrennung zwischen den verschiedenen Zulieferern gewährleistet wird. Es ist bevorzugt, dass das Rohr und/oder der Kupplungskörper wenigstens 30 bzw. 50 bzw. 70 bzw. 90 Gew.-% Kunststoff aufweisen.

Vorzugsweise ist der Verbindungsabschnitt des Kupplungskörpers als Steckabschnitt ausgebildet. Es ist möglich, dass das Rohr auf den Verbindungsabschnitt aufgesteckt oder in den Verbindungsabschnitt eingesteckt wird bzw. ist. Die Verbindung des Rohrs mit dem Verbindungsabschnitt ist vorzugsweise kraft-, und/oder form- und/oder stoffschlüssig ausgebildet. Beispielsweise kann das Rohr mittels Presspassung auf den Verbindungsabschnitt aufgesteckt werden, wodurch eine kraft- und formschlüssige Verbindung entsteht. Es ist möglich, das Rohr in eine Aufnahme des Verbindungsabschnitts einzustecken, um in einem zweiten Schritt eine stoffschlüssige Verbindung herzustellen.

Die eingangs genannte Aufgabe wird gelöst durch eine Verwendung der Kupplungsbuchse in einem Fahrzeug, vorzugsweise in einem Landfahrzeug, weiter vorzugsweise in einem Straßenfahrzeug.

Die eingangs genannte Aufgabe wird gelöst durch ein Verfahren zur Herstellung einer Kupplungsbuchse gemäß dem Oberbegriff von Anspruch 10, dadurch gekennzeichnet, dass die Kupplungsbuchse bzw. der Buchsenkörper bzw. das Sicherungsteil so ausgebildet ist/sind, dass die Herstellung des axial gesicherten Zustands nach einer tangentialen Sicherung der Verbindung zwischen dem Kopfteil und dem Dichtungsteil vorgenommen wird.

Hierdurch wird eine zeitliche Entkopplung der axialen Sicherung von einer tangentialen Sicherung erreicht, so dass auch eine räumliche Entkopplung dieser beiden Sicherungen möglich ist. Dies wiederum erlaubt eine feingliedrige tangentiale Sicherung bei dem gleichzeitigen Vorhandensein einer sehr robusten axialen Sicherung, so dass die eingangs genannte Aufgabe gelöst wird.

Nachfolgend wird die Erfindung anhand von vier Figuren eines Ausführungsbeispiels näher erläutert. Es zeigen in schematischer Darstellung
- Fig. 1: eine Übersichtsansicht einer erfindungsgemäßen Kupplungsbuchse,
- Fig. 2: einen Längsschnitt durch die Kupplungsbuchse aus Fig. 1 im zusammengesetzten Zustand,
- Fig. 3: eine Rückansicht der erfindungsgemäßen Kupplungsbuchse aus den Figuren 1 und 2,
- Fig. 4: eine Übersichtsansicht der Kupplungsbuchse aus den Figuren 1 bis 3 mit ausgeblendetem Kopfteil und ausgeblendetem Rückhalter.

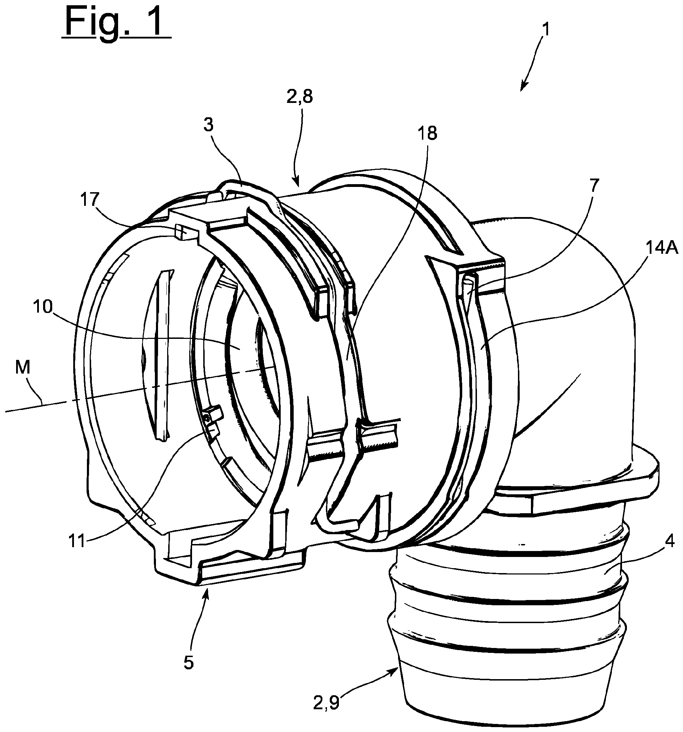

Gemäß Fig. 1 umfasst die Kupplungsbuchse 1 einen Buchsenkörper 2 sowie einen Rückhalter 3 und einen Dichtungsring 10. Der Buchsenkörper 2 umfasst zweckmäßigerweise eine Dichtungsnut 12, in welcher der Dichtungsring 10 angeordnet ist. Der Rückhalter 3 dieses Ausgangsbeispiels ist vorzugsweise VDA-konform und kann als U-förmiger Drahtbügel mit einer U-Basis und zwei U-Schenkeln ausgestaltet sein. Der Dichtungsring 10 umfasst vorzugsweise ein Elastomer zur kraftschlüssigen Abdichtung der Kupplungsbuchse 1 gegenüber einem hier nicht dargestellten komplementären Kupplungsstecker.

Der Kupplungsstecker kann eine Nut oder eine Schulter auf seiner Außenseite aufweisen, durch welche der Kupplungsstecker am Rückhalter 3 in bekannter Weise innerhalb der Kupplungsbuchse 1 einrasten kann. Es ist bevorzugt, dass der Rückhalter 3 und/oder der Dichtungsring 10 reversibel aus der Kupplungsbuchse 1 entnehmbar sind. Der Begriff "reversibel" meint vorzugsweise ein zerstörungsfreies Entnehmen.

Der Buchsenkörper 2 weist mit Blick auf die Figuren 1 bis 3 ein Kopfteil 8, einen Entkopplungsring 11 sowie ein Dichtungsteil 9 auf. In diesem Ausführungsbeispiel wird vorzugsweise zunächst der Dichtungsring 10 in das Dichtungsteil 9 eingesetzt, woraufhin dann zweckmäßigerweise der Entkopplungsring 11 zwecks Vorfixierung des Dichtungsrings 10 und zwecks Entkopplung in das Dichtungsteil 9 eingesetzt wird.

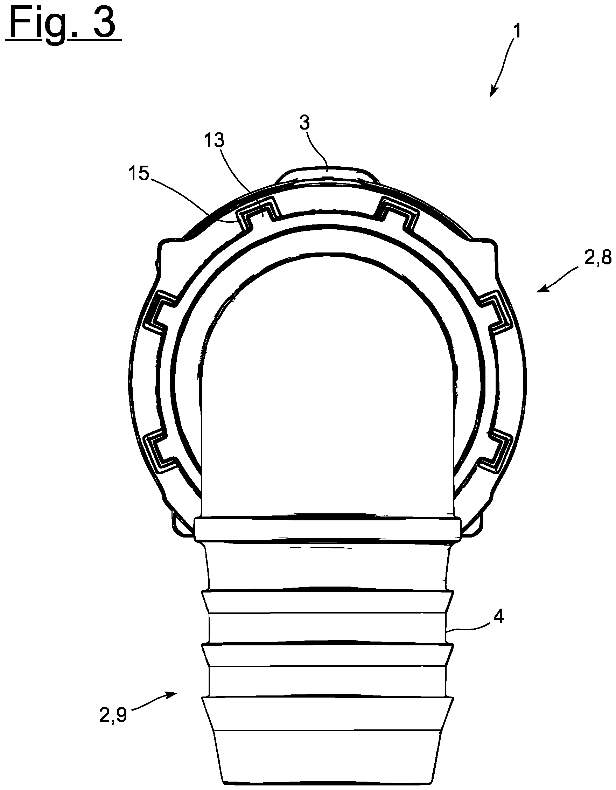

Zweckmäßigerweise und wie in Fig. 3 dargestellt umfasst das Dichtungsteil 9 eine Mehrzahl - beispielsweise acht - an Winkelstellelementen 13. Bevorzugt umfasst das Kopfteil 8 eine Mehrzahl - beispielsweise acht - an komplementären Winkelstellelementen 15. In diesem Ausführungsbeispiel sind die Winkelstellelemente 13 als Vorsprünge ausgebildet, welche mit den komplementären Winkelstellelementen 15 in Form von Ausnehmungen korrespondieren. Bei einem Zusammenführen des Kopfteils 8 und des Dichtungsteils 9 ist es bevorzugt, dass die Winkelstellelemente 13 bzw. die komplementären Winkelstellelemente 15 sich miteinander verzahnen bzw. miteinander kämmen. Es ist sehr bevorzugt, dass das Kopfteil 8 und das Dichtungsteil 9 - mit Hilfe der Winkelstellelemente 13 bzw. der komplementären Winkelstellelemente 15 - in einer Mehrzahl an tangentialen Positionen bzw. Winkelstellungen um die Mittelachse M herum miteinander kombinierbar sind. Im vorliegenden Ausführungsbeispiel können das Dichtungsteil 9 und das Kopfteil 8 in 45°-Schritten zueinander befestigt werden.

Das Sicherungsteil 7 dient zur Verbindung von Kopfteil 8 und Dichtungsteil 9 in axialer Richtung und definiert einen axial gesicherten Zustand. Es ist bevorzugt, dass der axial gesicherte Zustand erreicht ist, wenn das Sicherungsteil 7 bis zum Anschlag in den Buchsenkörper eingeführt ist. Das Sicherungsteil 7 ist bevorzugt so ausgebildet, dass die Herstellung des axial gesicherten Zustands durch das Sicherungsteil 7 in Umfangsrichtung zumindest abschnittsweise und vorzugsweise über einen ganzen Umfang hinweg unabhängig von der Winkelstellung zwischen dem Kopfteil 8 und dem Dichtungsteil 9 ist.

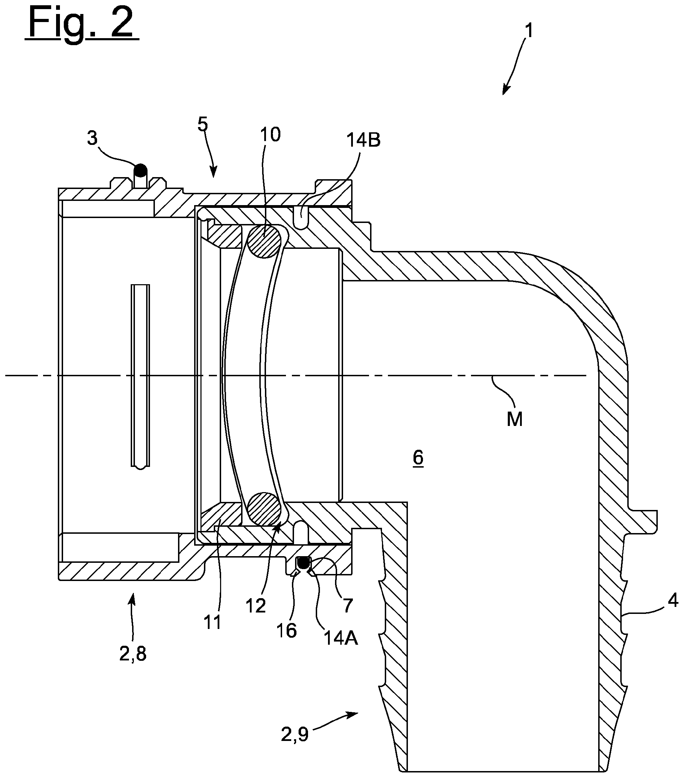

Das Sicherungsmittel 7 umfasst bevorzugt Metall und weiter bevorzugt einen Stahl und ganz besonders bevorzugt einen Draht. Besonders vorzugsweise ist das Sicherungsteil 7 U-förmig ausgebildet und umfasst eine U-Basis und zwei U-Schenkel. Bevorzugt weist das Sicherungsteil 7 Spreizungen an freien Enden der U-Schenkel auf, um mit Vorteil ein einfaches Einführen des Sicherungsteils 7 in die Sicherungsnut 14A, 14B zu ermöglichen. Gemäß der Figuren 1 und 2 ist die Sicherungsnut 14A, 14B bzw. der Buchsenkörper 2 und/oder das Sicherungsteil 7 vorzugsweise so ausgeprägt, dass das Sicherungsteil 7 im axial gesicherten Zustand zumindest teilweise und bevorzugt vollständig in dem Buchsenkörper 2 bzw. der Sicherungsnut 14A, 14B versenkt ist.

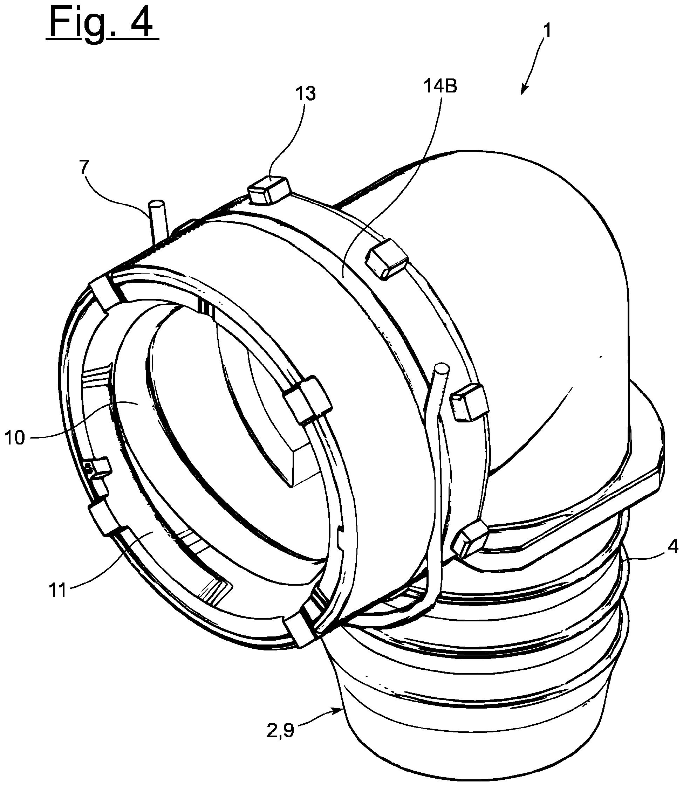

Vorzugsweise und wie in Fig. 1 und 4 ersichtlich, ist das Sicherungsteil 7 dieses Ausführungsbeispiels U-förmig. Das Sicherungsteil 7 wird vorzugsweise zur Herstellung des axial gesicherten Zustands in den Buchsenkörper 2 eingeführt. Hierzu weist der Buchsenkörper 2 zweckmäßigerweise eine Sicherungsnut 14A, 14B auf. Es ist bevorzugt, dass zumindest ein erster Abschnitt 14A der Sicherungsnut 14A, 14B im Kopfteil 8 und/oder zumindest ein zweiter Abschnitt 14B der Sicherungsnut 14A, 14B im Dichtungsteil 9 angeordnet ist. Im Ausführungsbeispiel ist der erste Abschnitt 14A der Sicherungsnut 14A im Kopfteil lediglich teilweise umlaufend ausgebildet. Der zweite Abschnitt 14B der Sicherungsnut 14A, 14B im Dichtungsteil 9 ist vorzugsweise vollständig umlaufend ausgestaltet.

Das Sicherungsteil 7 greift zur axialen Sicherung der Verbindung zwischen Dichtungsteil 9 und Kopfteil 8 zweckmäßigerweise in die Sicherungsnut 14A, 14B ein. Zwecks eines bevorzugten Eingriffs des Sicherungsteils 7 in der Sicherungsnut 14A, 14B weist bevorzugt der erste Abschnitt 14A der Sicherungsnut 14A, 14B vorzugsweise wenigstens ein Fixierelement 16 auf, s. Figur 2. Das Fixierelement 16 ist vorteilhafterweise ein Rastelement und kann insbesondere zwei Rastnasen umfassen. Mit Vorteil ist das Fixierelement 16 so ausgebildet, dass es mit der U-Basis des Sicherungsteils 7 fixierend zusammenwirkt.

Vorzugsweise sind das Kopfteil 8, der Entkopplungsring 11 und/oder das Dichtungsteil 9 jeweils aus Kunststoff und insbesondere mittels Spritzguss hergestellt. Mit Vorteil ist der Entkopplungsring 11 separat vom Kopfteil 8 und/oder vom Dichtungsteil 9hergestellt.Vorteilhafterweise umfasst der Entkopplungsring 11 ein Winkelfestlegungs-element, welches mit einem komplementären Winkelfestlegungselement des Dichtungsteils 9 korrespondiert.

Das Kopfteil 8 mag in bekannter Weise eine Rückhalteraufnahme 18 aufweisen, welche ausweislich der Figuren 1 und 2 insbesondere die U-Schenkel des Rückhalters 3 in sich aufnehmen kann. Erfindungsgemäß umfasst das Kopfteil 8 wenigstens einen Teil eines Kupplungsabschnitts 5. Der Kupplungsabschnitt 5 mag insbesondere durch die maximale axiale Erstreckung des Kupplungssteckers innerhalb der Kupplungsbuchse 1 definiert sein und kann sich, wie in Fig. 2 erahnt werden kann, auch bis in das Dichtungsteil 9 erstrecken.

Es ist möglich, dass das Kopfteil 8 bzw. der Buchsenkörper 2 eine Verdrehsicherung 17 umfasst, welche ein Verdrehen des Kupplungssteckers in dem Buchsenkörper 2 verhindert. Die Verdrehsicherung 17 mag mindestens eine Nut oder eine Feder umfassen und kann gemäß Fig. 1 insbesondere zwei Nuten aufweisen.

Erfindungsgemäß umfasst das Dichtungsteil 9 einen Verbindungsabschnitt 4 zur Verbindung mit einem Rohr oder einem Aggregat. Der Verbindungsabschnitt 4 mag zur noch anstehenden Verbindung mit einem Rohr oder einem Aggregat ausgebildet sein, kann aber auch bereits eine Verbindung mit einem Rohr oder Aggregat eingegangen sein. Der Verbindungsabschnitt 4 kann zum Auf- oder Einstecken ausgebildet sein und mag ein Stoffschluss, einen Kraftschluss und/oder einen Formschluss umfassen. Im vorliegenden Ausführungsbeispiel nach den Figuren 1 bis 4 ist der Verbindungsabschnitt 4 mit Widerhaken bzw. Rippen auf der Außenseite ausgebildet, um ein darauf gestecktes Rohr oder ein darauf aufgestecktes Aggregat sicher zu befestigen. Zweckmäßigerweise werden der Verbindungsabschnitt 4 und der Kupplungsabschnitt 5 über einen Fluidkanal 6 des Buchsenkörpers 2 fluidisch miteinander verbunden, s. Figur 2.

In diesem Ausführungsbeispiel ist die Kupplungsbuchse 1 gemäß der Figuren 1 bis 3 gewinkelt ausgestattet, so dass eine Mittelachse M des Kupplungsabschnitts 5 von einer in den Figuren nicht dargestellt Mittenachse des Verbindungsabschnitts 4 im Längsschnitt der Kupplungsbuchse 1 abweicht. Insbesondere können die Mittelachse M und die Mittenachse zueinander einen rechten Winkel bilden. Die Abwinkelung im Längsschnitt der Kupplungsbuchse 1 ist vorzugsweise in dem Dichtungsteil 9 realisiert, so dass das Kopfteil 8 mit einer Vielzahl an unterschiedlichen Dichtungsteilen 9 mit jeweils unterschiedlichen Abwinkelungen verbunden werden kann.

### Bezugszeichenliste

- 1: Kupplungsbuchse
- 2: Buchsenkörper
- 3: Rückhalter
- 4: Verbindungsabschnitt von 2, 9
- 5: Kupplungsabschnitt von 2, 8
- 6: Fluidkanal von 2
- 7: Sicherungsteil
- 8: Kopfteil
- 9: Dichtungsteil
- 10: Dichtungsring
- 11: Entkopplungsring
- 12: Dichtungsnut von 2
- 13: Winkelstellelement von 9
- 14A: Erster Abschnitt der Sicherungsnut 14A, 14B
- 14B: Zweiter Abschnitt der Sicherungsnut 14A, 14B
- 15: Komplementäres Winkelstellelement von 8
- 16: Fixierelement
- 17: Verdrehsicherung
- 18: Rückhalteraufnahme
- M: Mittelachse von 5

## Patentansprüche

1. Kupplungsbuchse (1), umfassend einen Buchsenkörper (2) und einen Rückhalter (3), wobei der Buchsenkörper (2) einen Verbindungsabschnitt (4) und einen Kupplungsabschnitt (5) aufweist, wobei der Rückhalter (3) in dem Kupplungsabschnitt (5) angeordnet bzw. anordenbar ist, wobei der Kupplungsabschnitt (5) ausgebildet ist, einen komplementären Kupplungsstecker in sich aufzunehmen, wobei der Verbindungsabschnitt (4) mit einem Rohr oder einem Aggregat verbindbar bzw. verbunden ist, wobei ein Fluidkanal (6) des Buchsenkörpers (2) den Kupplungsabschnitt (5) und den Verbindungsabschnitt (4) fluidisch miteinander verbindet, wobei eine Mittelachse (M) des Kupplungsabschnitts (5) eine axiale, eine radiale und eine Umfangsrichtung des Kupplungsabschnitts (5) definiert,
wobei der Buchsenkörper (2) ein Kopfteil (8) und ein Dichtungsteil (9) aufweist, wobei das Kopfteil (8) und das Dichtungsteil (9) separat voneinander hergestellt und miteinander über eine Verbindung in einer Winkelstellung in Umfangsrichtung verbunden bzw. verbindbar sind, wobei das Kopfteil (8) den Kupplungsabschnitt (5) wenigstens teilweise umfasst, wobei das Dichtungsteil (9) den Verbindungsabschnitt (4) wenigstens teilweise umfasst, wobei die Kupplungsbuchse (1) ein Sicherungsteil (7) zur Verbindung von dem Kopfteil (8) und dem Dichtungsteil (9) umfasst, wobei das Sicherungsteil (7) einen axial gesicherten Zustand definiert, in dem das Kopfteil (8) und das Dichtungsteil (9) durch das Sicherungsteil (7) axial aneinander gesichert sind,
**dadurch gekennzeichnet, dass**
die Kupplungsbuchse (1) bzw. der Buchsenkörper (2) bzw. das Sicherungsteil (7) so ausgebildet ist/sind, dass die Herstellung des axial gesicherten Zustands von einer tangentialen Sicherung der Verbindung zwischen dem Kopfteil (8) und dem Dichtungsteil (9) räumlich und/oder zeitlich entkoppelt ist.

2. Kupplungsbuchse (1) nach Anspruch 1, wobei die Kupplungsbuchse (1) bzw. der Buchsenkörper (2) bzw. das Sicherungsteil (7) so ausgebildet ist/sind, dass der axial gesicherte Zustand - zumindest abschnittsweise in Umfangsrichtung und vorzugsweise über einen vollständigen Umfang hinweg - unabhängig herstellbar von der Winkelstellung zwischen dem Kopfteil (8) und dem Dichtungsteil (9) ist.

3. Kupplungsbuchse (1) nach Anspruch 1 oder 2, wobei das Dichtungsteil (9) wenigstens ein Winkelstellelement (13) zur Einstellung der Winkelstellung zwischen dem Dichtungsteil (9) und dem Kopfteil (8) umfasst, wobei das Kopfteil (8) vorzugsweise wenigstens ein zum Winkelstellelement (13) komplementäres Winkelstellelement (15) umfasst.

4. Kupplungsbuchse (1) nach einem der Ansprüche 1 bis 3, wobei die Kupplungsbuchse (1) so ausgebildet ist, dass das Sicherungsteil (7) zur Herstellung des axial gesicherten Zustands in radialer Richtung in den Buchsenkörper (2) einführbar bzw. eingeführt ist.

5. Kupplungsbuchse (1) nach einem der Ansprüche 1 bis 4, wobei der Buchsenkörper (2) eine Sicherungsnut (14A, 14B) aufweist, wobei das Sicherungsteil (7) und/oder der Buchsenkörper (2) bevorzugt so ausgebildet ist/sind, dass das Sicherungsteil (7) bei einem Einführen in den Buchsenkörper (2) und/oder während des axial gesicherten Zustands zumindest teilweise in die Sicherungsnut (14A, 14B) eingreift.

6. Kupplungsbuchse (1) nach einem der Ansprüche 1 bis 5, wobei das Sicherungsteil (7) separat von dem Dichtungsteil (9) und/oder dem Kopfteil (8) hergestellt ist und vorzugsweise im axial gesicherten Zustand relativ zum Buchsenkörper (2) bzw. zum Dichtungsteil (9) und/oder zum Kopfteil (8) beweglich ist.

7. Kupplungsbuchse nach einem der Ansprüche 1 bis 6, wobei das Sicherungsteil (7) U-förmig und vorzugsweise als Drahtbügel ausgebildet ist.

8. Kupplungsbuchse (1) nach einem der Ansprüche 1 bis 7, wobei der Rückhalter (3) Metall aufweist und bevorzugt als Drahtbügel ausgebildet ist.

9. Kupplungsbuchse (1) nach Anspruch 1 bis 8, wobei die Kupplungsbuchse (1) bzw. der Buchsenkörper (2) einen Entkopplungsring (11) zum Entkoppeln des Kopfteils (8) von der Dichtungsnut (12) umfasst.

10. Verfahren zur Herstellung einer Kupplungsbuchse (1), wobei die Kupplungsbuchse (1) einen Buchsenkörper (2) und einen Rückhalter (3) aufweist, wobei der Buchsenkörper (2) einen Verbindungsabschnitt (4) und einen Kupplungsabschnitt (5) umfasst, wobei der Rückhalter (3) in dem Kupplungsabschnitt (5) angeordnet bzw. anordenbar ist, wobei der Kupplungsabschnitt (5) ausgebildet ist, einen komplementären Kupplungsstecker in sich aufzunehmen, wobei der Verbindungsabschnitt (4) mit einem Rohr oder einem Aggregat verbindbar bzw. verbunden ist, wobei ein Fluidkanal (6) des Buchsenkörpers (2) den Kupplungsabschnitt (5) und den Verbindungsabschnitt (4) fluidisch miteinander verbindet, wobei eine Mittelachse (M) des Kupplungsabschnitts (5) eine axiale, eine radiale und eine Umfangsrichtung des Kupplungsabschnitts (5) definiert,
wobei der Buchsenkörper (2) ein Kopfteil (8) und ein Dichtungsteil (9) aufweist, wobei das Kopfteil (8) und das Dichtungsteil (9) separat voneinander hergestellt und miteinander über eine Verbindung in einer Winkelstellung in Umfangsrichtung verbunden sind, wobei das Kopfteil (8) den Kupplungsabschnitt (5) wenigstens teilweise umfasst, wobei das Dichtungsteil (9) den Verbindungsabschnitt (4) wenigstens teilweise umfasst, wobei die Kupplungsbuchse (1) ein Sicherungsteil (7) zur Verbindung von Kopfteil (8) und Dichtungsteil (9) umfasst, wobei das Sicherungsteil (7) einen axial gesicherten Zustand definiert, in dem das Kopfteil (8) und das Dichtungsteil (9) durch das Sicherungsteil (7) axial aneinander gesichert sind,
**dadurch gekennzeichnet, dass**
die Kupplungsbuchse (1) bzw. der Buchsenkörper (2) bzw. das Sicherungsteil (7) so ausgebildet ist/sind, dass die Herstellung des axial gesicherten Zustands nach einer tangentialen Sicherung der Verbindung zwischen dem Kopfteil (8) und dem Dichtungsteil (9) vorgenommen wird.
